(19) Europäisches Patentamt
European Patent Office
Office européen des brevets

(11) **EP 4 513 351 A1**

(12) **EUROPEAN PATENT APPLICATION**

(43) Date of publication:
**26.02.2025 Bulletin 2025/09**

(21) Application number: **23193277.3**

(22) Date of filing: **24.08.2023**

(51) International Patent Classification (IPC):
**G06F 16/2455** (2019.01)　　**G06F 16/903** (2019.01)
**G06F 16/9035** (2019.01)　　**G06N 3/00** (2023.01)

(52) Cooperative Patent Classification (CPC):
**G06F 16/24568; G06F 16/90335; G06F 16/9035;
G06N 3/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Aktiengesellschaft
80333 München (DE)**

(72) Inventors:
• **Bruhn, Cecilia Margareta
80807 München (DE)**
• **Decker, Thomas
85716 Unterschleißheim (DE)**
• **Lebacher, Michael
84513 Töging am Inn (DE)**

(74) Representative: **Siemens Patent Attorneys
Postfach 22 16 34
80506 München (DE)**

(54) **PROVIDING A ROBUST ROOT-CAUSE OF AN ANALYSIS RESULT OUTPUT BY AN AI BASED ANALYSIS MODEL**

(57)　Computer-implemented method for providing a robust root-cause of an analysis result (Yi), output by an AI based analysis model (f) monitoring a machine (10) or on a product of the machine (10), comprising:
- receiving (S1) at least one collected datapoint (xi) comprising multivariate sensor data collected at the machine (10) or the product of the machine (10), each collected datapoint (xi) is structured as a multi-dimensional vector and each element of the vector representing a feature of the machine (10),
- determining an analysis result (52) with respect to an analysis task by processing the collected datapoint (xi) by the analysis model (f),
- determining at least one meta-explanation value (53) indicating at least one root-cause of the determined analysis result (Yi) by a weighted aggregation of feature importance values output by at least two different explanation models (e1,...,en), wherein a weight value depends on a stability of the feature importance values at the collected datapoint (xi) for each of the explanation models (e1,...,en), and
- outputting (S4) the analysis result (Yi) and the meta-explanation value (mq) representing the root-cause by a user interface.

## FIG 1

```
           ┌─────────────────────┐
           │       IN xi         │──── S1
           └─────────────────────┘
                      │
                      ▼
           ┌─────────────────────┐
           │      Yi = f(xi)      │──── S2
           └─────────────────────┘
                      │
                      ▼
           ┌─────────────────────────┐
           │  ┌───────────────┐      │
           │  │  e1, ..., en  │── S31 │
           │  └───────────────┘      │
           │  ┌───────────────┐      │── S3
           │  │               │── S32 │
           │  └───────────────┘      │
           │  ┌───────────────┐      │
           │  │               │── S33 │
           │  └───────────────┘      │
           └─────────────────────────┘
                      │
                      ▼
           ┌─────────────────────┐
           │   OUT Yi, mq (xi, f) │──── S4
           └─────────────────────┘
```

EP 4 513 351 A1

**Description**

The present disclosure relates to a computer-implemented method for providing a robust root-cause of an analysis result output by an AI based analyzing model processing input data of a machine or on a product of the machine, a respective apparatus and a respective computer program product.

Nowadays, sensors are omnipresent in all kinds of heavy machinery, in devices of manufacturing plants, in vehicles for monitoring and controlling autonomous driving. Data-driven applications using machine learning models process such sensor data and output an estimation of the state of the machine, device or observed environment.

One important application field of sensors is monitoring the functionality of heavy machinery such as pumps, turbines, die casting machines etc. To do so, sensors are installed on these devices and machines and measure different physical parameters such as electrical current, temperature, pressure, position and furthermore which enables monitoring of the state of the entire system. Sensor data sampled over time enables continuous monitoring. If the machinery is subject to different damages, the sensor data values typically show unusual, suspicious patterns and anomalies in the data. The data can be analyzed by machine learning models which are trained to detect these anomalies.

Sensor data, including image data, are also used for quality monitoring of products manufactured by a manufacturing device, like a robot or an additive manufacturing machine in a manufacturing plant. Data collected by sensors and other devices, that allow collecting data relating to the operation of one or several machines in a production line, are input to all kinds of Machine Learning and AI techniques performing, e.g., a classification task and/or a regression task, are used for anomaly prediction and predictive maintenance of the machine or production line. Image data is processed in machine learning models performing image classification tasks for quality monitoring or object detection for controlling autonomous movement or driving. Further, regression tasks are applied for sensor fusion and prediction.

However, there are multiple problems related to detecting anomalies and subsequently failures from sensor data. Since the status of the machine often depends on various physical parameters and especially depends on combinations of specific parameters, the machine learning model is of complex structure because it has to be trained taking into account time series of sensor data representing all of the various parameters. Further, such learned machine learning (ML) models are called black-box models and the "logic" behind the provided result is often not transparent and human-understandable. This means that it is not possible to understand the global behavior of the model, i.e., how does the model itself process data in general, and to understand locally how the machine learning model behaves, e.g., how a certain prediction based on specific input data was made by the machine learning model. Throughout this document a model is to be understood as being a machine learning model.

These local and global understanding are required not only to optimize a machine learning model and to provide more accurate output for a variety of input data. Lack on global and local understanding of the machine learning model leads to problems determining the influence of the different measured physical parameters of the input data and subsequently to conclude on a root-cause of the detected anomaly. In operational use, reliable information on the feature of the input which contributes mainly to the result output by the ML model are essential to take counter measures at the monitored machine or to determine the root-cause of the anomaly.

There exist different approaches of explainable AI that aim to make the reasoning of machine learning models more understandable. Different explainable AI approaches provide good results for different subsets of input data and could be applied to a ML model in parallel. These explainable AI approaches are ML models on their own that are based on different assumptions and restrictions. This makes them, by nature conflicting and potentially inconsistent. This is not only unfortunate but destroys the value to be gained from applying different explainability techniques.

Therefore, it is the object of the present application to provide reliable and optimized information on a root-cause for a result output by a ML model that resolve inconsistencies when multiple explainable AI approaches are employed in parallel.

This object is solved by the features of the independent claims. The dependent claims contain further developments of the invention.

A first aspect concerns a computer-implemented method for providing a robust root-cause of an analysis result output by an AI based analyzing model monitoring a machine or on a product of the machine, comprising the following steps:

- receiving at least one collected datapoint comprising multivariate sensor data collected at the machine or the product of the machine, each collected datapoint is structured as a multi-dimensional vector and each element of the vector representing a feature of the machine,
- determining an analysis result with respect to an analysis task by processing the collected datapoint by the analyzing model,
- determining a meta-explanation value indicating at least one root-cause of the determined analysis result by a weighted aggregation of feature importance values output by at least two different explanation models, wherein a weight value depends on a stability of the feature importance values at the collected datapoint for each of the explanation models, and

- outputting the analysis result and the meta-explanation value by a user interface.

The root-cause of the determined analysis result comprises those one or several features of the datapoint having the highest importance values among all features of the datapoint and thus cause the determined analysis result. The meta-explanation value is a consolidated importance value which takes into account all explanations provided by all applied explanation models for the considered datapoint but weighted with the stability of the explanation model at the datapoint. The meta-explanation value provides a reliable root-cause for the analysis output for all datapoints and taking into account the explanations of all explanation models.

In an embodiment of the method comprises the step of determining, by each of at least two different explanation models, the feature importance value for each feature of the collected datapoint to the analysis result by inputting the ML analysis model and the collected data point into the explanation model.

Each of the explanation models analyses the analysis model at the input datapoint and provides for each feature of the datapoint an importance value which indicates the contribution of this feature to the analysis result. This technique provides an explanation of the analysis result in terms of importance of contributing features.

In an embodiment of the method, the weight value of the explanation model is determined by combining the importance values which are output by the explanation model when datapoints are input which are close to the collected data point.

Thus, the weight value provides not only the feature importance value at the input datapoint itself, but also the variation of the feature importance values output by the explanation model at additional datapoints which are located in the vicinity of the input datapoint of the analysis model. This provides a resilient qualitative evaluation of the explanation model.

In an embodiment of the method, the weight value of the explanation model is determined by combining the importance values which are output by modified versions of explanation models which differ by at least one hyperparameter of the explanation model.

Thus, the weight value considers variations of the explanation model itself. If several, preferably slightly modified explanation model provide similar feature importance values the confidence in results of the explanation model is high and the weight value is high. This provides a meaningful criterion for the explanation model to provide reliable feature importance values.

In an embodiment of the method, redundant explanation models are identified by determining highly correlated explanation models and the redundant explanation models are longer applied for determining feature importance values.

This reduces the processing power required to execute the method without significant loss of accuracy of the meta-explanation value.

In an embodiment of the method, a global meta-explanation value for all datapoints is generated by an aggregation approach over all datapoints, preferably by averaging at the weight values over all datapoints.

This provides a measure to assess the quality of the results provided by the combined explanation model approach. It also indicates whether the combination of explanation model suits for the analysis model under consideration.

In an embodiment of the method, the explanation model is a local explanation model or a global explanation model.

Thus, the meta-explanation is evaluated by combination of local explanation models and global explanation models which provides a reliable, trustworthy root-cause over a wide range of input datapoints.

In an embodiment of the method, the local explanation model and/or the global explanation model are model-agnostic.

Model-agnostic explanation models are unaware regarding specific analysis models. Thus, the approach can be applied to any analysis model.

In an embodiment of the method, the analysis model is a machine learning model configured to perform a classification task or a regression task, especially a deep neural network or a decision tree ensemble.

The combined explanation model approach provides high quality and reliable explanations especially for complex models such as deep neural networks or a decision tree ensemble.

In an embodiment of the method, an alarm message or an instruction message is derived from the analysis result and the meta-explanation value and transferred to the machine.

The alarm message directly notifies operation personnel of the analysis result, especially if the result indicates an anomaly, requests a short-term maintenance, or indicates a product of low quality.

In an embodiment of the method, the analysis task is one of an anomaly detection, a predictive maintenance prediction, a quality monitoring.

A second aspect concerns a monitoring apparatus for analyzing a machine or a product of the machine, comprising:

- a data interface configured to receive at least one collected datapoint comprising multivariate sensor data collected at the machine or the product of the machine, each collected datapoint is structured as a multi-dimensional vector and each element of the vector representing a feature of the machine,

- an analyzer unit configured to determine an analysis result with respect to an analysis task by processing the collected datapoint by an ML analysis model,
- an explainer unit configured to determine a meta-explanation value indicating at least one root-cause of the determined analysis result by a weighted aggregation of feature importance values output by at least two different explanation models, wherein a weight value depends on a stability of the feature importance values at the collected datapoint for each of the explanation models, and
- a user interface configured to output the analysis result and the meta-explanation value and/or the root-cause.

The monitoring apparatus applies AI models for performing different tasks providing not only a prediction related to the task but also a root-cause, i.e., an explanation which features of the input datapoint caused mainly the prediction.

According to a further embodiment, the apparatus comprises a machine interface configured to derive an alarm message and/or an instruction message from the analysis result and the meta-explanation value and to transfer the alarm and/or instruction message to the machine.

The apparatus can directly control the monitored machine by the instruction messages. Alarm message can be analyzed by the machine and trigger further action in the machine.

A third aspect concerns a computer program product directly loadable into the internal memory of a digital computer, comprising software code portions for performing the steps of the method for monitoring a machine, as described above, when said product is run on said digital computer.

Various kinds and types of machines can be considered. Examples include, e.g., factory equipment, e.g., manufacturing apparatuses, robots, or assembly line devices. Further examples include power plants or transmission networks, e.g., turbines or generators, substation equipment. Examples include mobility infrastructure equipment, e.g., people mover, automated escalators, lifts, etc. Further examples include heavy machinery such as pumps, turbines, die casting machines, etc. Further examples include vehicles, e.g., cars, locomotives, airplanes, or ships.

The invention will be explained in more detail by reference to accompanying figures. Similar objects will be marked by the same reference signs.

Figure 1    illustrates an embodiment of the inventive computer-implemented method by a flow diagram.

Figure 2    schematically illustrates an embodiment of the inventive apparatus.

It is noted that in the following detailed description of embodiments, the accompanying drawings are only schematic, and the illustrated elements are not necessarily shown to scale. Rather, the drawings are intended to illustrate functions and the co-operation of functions. Here, it is to be understood that any connection or coupling of functional blocks, devices, components or other physical or functional elements could also be implemented by an indirect connection or coupling, e.g., via one or more intermediate elements. A connection or a coupling of elements or components or nodes can for example be implemented by a wire-based, a wireless connection and/or a combination of a wire-based and a wireless connection. Functional units can be implemented by dedicated hardware, e.g., processor, firmware or by software, and/or by a combination of dedicated hardware and firmware and software. It is further noted that each functional unit described for an apparatus can perform a functional step of the related method. In the same way, each functional step described for a method can be performed in a functional unit of the related apparatus.

AI based tools are applied to a large variety of machines, devices or other kind of technical systems to detect anomalies, predict maintenance works, monitor quality of manufactured products or to detect objects. These AI based tools comprise an analysis model which is in most cases a black box which receives the collected input data and outputs a prediction. It does not provide any indication which features of the input data influenced and caused the analysis model most to output the prediction. This causes the problem, that users have low trust the prediction and countermeasures, e.g., when an anomaly is predicted, can be derived.

The main point of explanation methods is that they aim to represent which features of the input data are important for the prediction of the analysis model, and in which way are the features important for the prediction. Throughout this document, explanation methods are synonymously also called explanation models.

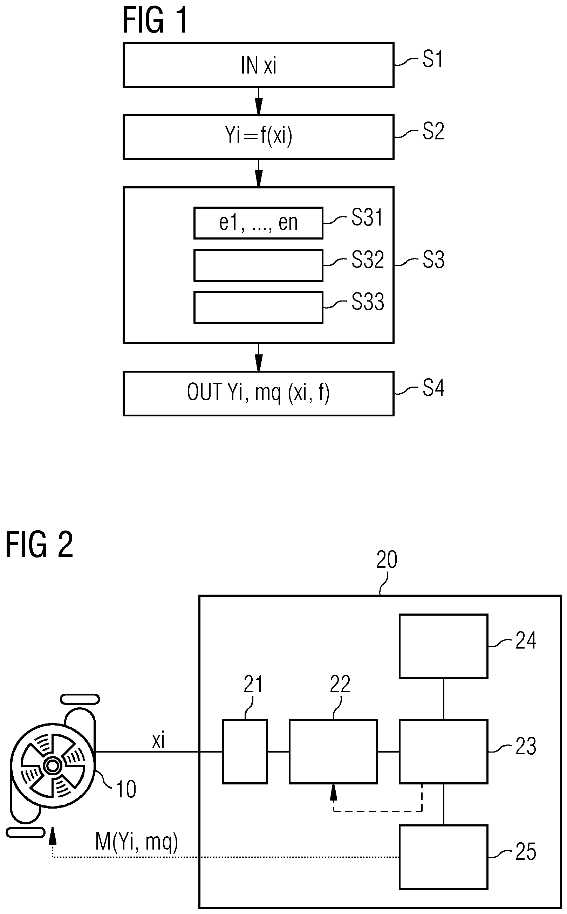

The proposed method provides a robust root-cause of an analysis result output by an AI based analysis model monitoring a machine or on a product of the machine. Details are explained by means of Fig.1.

In a first step S1 at least one collected datapoint $x_i$ comprising multivariate sensor data collected at the machine or the product of the machine are received. Each collected datapoint $x_i$ is structured as a multi-dimensional vector and each element of the vector represents a feature of the machine. Features are, e.g., physical parameters like temperature, pressure, power, collected by the sensor. Features of an image data which is sensor data of a visual sensor like a camera, are single pixels or subsets of pixels. The datapoint can also comprise a sequence of sensor data collected over a specific period of time. In this case the number of features is given by the number of parameters in the input datapoint multiplied by the number of points in time a sensor data is collected. A feature importance value is determined for each feature.

The analysis result Yi is determined with respect to an analysis task by processing the at least one collected datapoint xi by the analyzing model f, see S2.

In step S3 a meta-explanation value mq is determining indicating at least one root-cause of the determined analysis result Yi by a weighted aggregation of feature importance values output by at least two different explanation models e1, ...,enwherein a weight value w depends on a stability of the feature importance values at the collected datapoint xi for each of the explanation models e1,...,ee. The analysis result and the meta-explanation value mq representing the root-cause is output via a user interface, see step S4. The root-cause of the result of the analysis model indicates the most relevant features of the input data which caused the analysis model to output the analysis result.

Feature importance is an explanation method which identifies features or variables that are most important in determining the output of a considered ML model, here especially the analysis model. Feature importance is applied to the analysis model when processing the specific input datapoint and assigns a feature importance value to each single feature of the input datapoint. The assigned feature importance value provides a measure for the importance of the respective feature of the machine to the analysis result Yi output for the specific input datapoint xi.

To determine the meta-explanation value mq in S3 the feature importance value is determined, see S31 for each feature of the collected datapoint xi to the analysis result Yi by inputting the machine learning analysis model f and the collected data point xi into the explanation model e1,...,en. This is performed for each of at least two different explanation models e1,...,en. The weight value of the explanation model ep is determined, see S32, by combining the feature importance values which are output by the explanation model when datapoints are input which are close to the collected data point. Alternatively, or additionally, the weight value of each of the explanation models is determined by combining the importance values which are output by modified versions of the considered explanation model, see S33. The modified versions of the explanation model differ by at least one hyperparameter of the explanation model.

Redundant explanation models are identified by determining highly correlated explanation models. If a correlation indicator which represents the correlation degree between two explanation models is above a predefined threshold one of the explanation models is identified as redundant explanation models. The redundant explanation model is no longer abandoned and no longer applied for determining feature importance values.

Optionally, a global meta-explanation value is generated by an aggregation approach over all datapoints. Preferably the global meta-explanation value is determined by averaging the weight values over all datapoints. The global meta-explanation value indicates a quality grade for the combined explanation models.

Local explanation model as well as global explanation models can be applied in this combined explanation approach. Preferably, each of the explanation models is model-agnostic. I.e., it provides explanations for arbitrary analysis model. Examples of local explanation models are LIME, a simple local additive approximation of the complicated model, and SHAP providing simple and additive explanations for local instances. Local explanation models provide an explanation of the analysis result for one specific input datapoint, wherein global explanation models provide an explanation of analysis results for a wide range of input datapoints.

Examples of Global explanation models are Partial Dependence Plots, showing the partial influence of selected features on the output, or permutation feature importance, showing the partial importance of selected feature, SAGE, or impurity-based importance.

The analysis model f is a machine learning model configured to perform a classification task or a regression task. Since the method outlined here is model agnostic it is not restricted to any classifier or regression model. The analysis model can be a Deep Neural Network DNN for a supervised approach, e.g., DNN Classifier such as Long short-term memory LSTM, a Convolutional Neural Network CNN, a Recurrent Neural Network RNN if labels are available.

The analysis task is one of an anomaly detection, a predictive maintenance prediction, a quality monitoring. An alarm message or an instruction message is derived from the analysis result and the meta-explanation value. The instruction message is transferred to the machine, preferably to a controller of the machine and applied to adapt setting of the machine. The alarm message is preferably transferred to an input interface of the machine, e.g., to a monitoring panel indicating the most relevant features of the machine which causes the provided analysis result. This is an anomaly in the operation of the monitored machine, a maintenance request or a product having a quality below a certain quality threshold.

An embodiment of an apparatus 20 configured to execute described method is depicted in Fig. 2 and describe below. The apparatus 20 is configured to analyze a machine 10 or a product of the machine 10. The apparatus 20 is comprises a data interface 21, an estimator unit 22, an explanation unit 23, a user interface 24, and optionally a machine interface 25.

The data interface 21 is configured to receive at least one collected datapoint xi comprising multivariate sensor data collected at the machine 10 or the product of the machine 10, each collected datapoint xi is structured as a multi-dimensional vector and each element of the vector represents a feature of the machine 10. The analyzer unit 22 is configured to determine an analysis result with respect to an analysis task by processing the collected datapoint xi by an machine learning analysis model. The explainer unit 23 is configured to determine a meta-explanation value indicating at least one root-cause of the determined analysis result by a weighted aggregation of feature importance values output by at least two different explanation models. The user interface 24 is configured to output the analysis result and the meta-explanation value and/or the root-cause. The machine interface is configured to derive a message M, i.e., an alarm message and/or an instruction message from the analysis result Yi and the meta-explanation value mq and to transfer the alarm and/or instruction message to the machine 10.

The apparatus 20 is preferable one of an anomaly detector, a predictive maintenance evaluator, or a quality monitor. The invention further comprises a computer program product directly loadable into the internal memory of a digital computer, comprising software code portions for performing the steps of the method as described above when said product is run on said digital computer.

The apparatus 20 monitors the machine 10 based on input data which are sensor data collected at the machine 10 and outputs information, i.e., the analysis result Yi accompanied by explanations of the information, i.e., the meta-explanation value mq via the user interface 24. User like surveillance personnel use the analysis result and its explanation to perform surveillance action. In a more elaborated embodiment, the machine interface 25 of the apparatus 20 generates an alarm message M based on the analysis result Yi and the meta-explanation value mq. The alarm message may be received and displayed by a surveillance device of the machine 10.

In a more sophisticated embodiment, the machine interface 25 derives from the analysis result Yi and mete-explanation value at least one instruction message. The instruction message is transferred to the machine and may cause changes in the settings of the machine 10.

In the following a more detailed explanation are provided concerning a basic considerations, central idea and concrete approach.

Basic considerations

Given input data $x_i \in \mathbb{R}^k$, $i = 1, ..., n$ and ground truth labels $y_i \in \mathbb{R}^l$ the analysis model $f(x_i)$, which is an AI based machine learning model, provides predictions, i.e., outputs the analysis result $\hat{y}_i \in \mathbb{R}^l$. The analysis output $\hat{y}_i$ is also represented by Yi throughout this document and in Figures 1 and 2. The analysis model $f(x_i)$ represent either a regression problem with $l = 1$ or a classification problem with $l > 1$ and $\hat{y}_{i,j} \in (0,1)$, $j = 1, ..., l$ with $\sum_j \hat{y}_{i,j} = 1$. I.e., in case of a regression problem solving a regression task, the prediction $\hat{y}_{i,1}$ indicates a probability value for one specific event. In case of a classification problem solving a classification task, the analysis result $\hat{y}_{i,j}$ E (0,1), $j = 1, ... , l$ provides one probability value between 0 and 1 that the for each of 1 possible classes. Hence, the disclosed method considers all standard supervised machine learning approaches, i.e., it considers all standard supervised analysis models $f(x_i)$. The analysis model $f(x_i)$ is not restricted to a specific use case. I.e., the collected datapoint $x_i$, which is structured as a multi-dimensional vector and each element of the vector represents a feature of the machine could represent tabular data, time series data or image data.

Explanation models are denoted by $e(x, f)$. The explanation model $e(x, f)$ can be one of following two classes:

- Local Permutation- based Attribution Models, e.g., LIME (Local Interpretable Model-agnostic Explanations), SHAP (SHapley Additive exPlanations), and similar ones.
- Local Gradient-based Measures, e.g., Integrated Gradients, Grad-Cam, Saliency Maps, and similar ones.

Further on, also global explainable AI models, i.e., global XAI methods, can be used as explanation model.

The main point of explanation models $e(x, f)$ is that they aim to represent which features are, in which way, important for the prediction of the analysis model $f(x_i)$. If the collected datapoint is a tabular data, its features are the elements of the tabular data. If the collected datapoint is a timeseries of sensor datapoints, each element of the datapoint is a feature. If the collected datapoint is image data, each pixel or each group of pixels are a feature.

The quantification of importance, i.e., the determination of feature importance values, most often is related to the loss or the variance of the predictions once the input datapoint is manipulated or by inspection of the gradients. While searching for a unified measure of how good an explanation is, one cannot rely on its ability to reproduce the prediction of the machine learning model, since some methods, such as SHAP(see https://www.researchgate.net/publicatio n/317062430_A_Unified_ Approach_to_Interpreting_Model_Predictions), by definition aim to give an exact additive decomposition of the predicted value. Hence, there is the situation where we do have two additive explanation models $e_1(x_i, f)$ and $e_2(x_i, f)$, both perfectly replicate the prediction for data instance $i$:

$$e_1(x_i, f) = \phi_0 + \sum_{q=1,\dots,k} \phi_{q,i} = \hat{y}_i$$

$$e_2(x_i, f) = \xi_0 + \sum_{q=1,\dots,k} \xi_{q,i} = \hat{y}_i$$

Hence, both explanation models represent a 'perfect' explanation, i.e., feature importance values, in terms of additively decomposing the prediction $\hat{y}_i$ in terms of the contributions of the input features. However, it is perfectly possible that $\phi_{q,i} \neq \xi_{q,i} \forall q = 1, \dots, k$ and the corresponding interpretations might be totally different. E.g., if $\phi_{1,i} = 1$ and $\xi_{1,i} = 0$ explanation model $e_1(x_i, f)$ would imply that feature 1 contributes positively to the prediction while $e_2(x_i, f)$ states that feature 1 does not contribute at all. A scenario that is highly likely since many of these explanation models come with mechanisms that enforce sparseness of the explanation.

A simple approach in this example of forming a meta-explanation value would be to form a simple average, as described in Rieger and Hansen Rieger and Hansen (2020: Aggregating explanation methods for stable and robust explainability ; https://arxiv.org/abs/1903.00519), such that the meta explanation is represented by a simply average:

$$\eta_{1,i} = \frac{1}{2}\phi_{1,i} + \frac{1}{2}\xi_{1,i}$$

In the example this would result in $\eta_{q,i} = 0.5$ which is an unfortunate outcome, since it halves the importance assigned by $e_1(x_i, f)$ and attributes feature importance that was not found at all to $e_2(x_i, f)$. It is, thus, extremely unsatisfactory.

To provide a suitable meta-explanation, it is required to find an aggregation rule that is more rigorously grounded in the original data and the explanation model behavior. Consequently, a more optimal weighting rule is disclosed that works even without access to ground-truth labels.

Meta-explanation approach

A Meta-explainer, i.e., a meta-explanation value is proposed which is a weighted combination of the explanations, i.e., of feature importance values output by different explanation models. Hence a meta-explanation value $m$ gives for each numeric representation of two or more explanation models $e$ one combined. I.e.:

$$m\big(e_1(x_i, f), \dots, e_r(x_i, f)\big) = (m_1(x_i, f), \dots, m_k(x_i, f))$$

where the p-th explanation model ($p = 1, \dots, r$) is denoted by $m_p(x_i, f)$ and outputs for each feature $q$ ($q = 1, \dots, k$) of k features a feature importance value $e_p(x_i, f)[q]$. The meta-explanation value $m$ is provided for datapoint $x_i$, based on model $f$ for feature $q$, derived from explanation model $p$. Shorthand these explanations are defined to be $e_p(x_i, f)[q] = :e_{i,p,q}$. The explanation models are additive such that

$$m_q(x_i, f) = \sum_{p=1,\dots,r} w_p[q] \, e_p(x_i, f)[q].$$

In words, the meta-explanation value for the q-th feature is defined as the weighted combination of the r feature importance values for this feature $e_p(x_i, f)[q]$. The weighting is given by $w_p[q]$ representing the weights for the p feature importance values for the q-th feature.

The goal is now to find optimal weights $w_p$ under the side constraints: $w_p[q] \in (0,1)$ $and$ $\sum_{p=1,\dots,r} w_p[q] = 1$.

It is proposed to infer these weights by the sensitivity of these feature attribution measures as one option against random permutation in the input space and/or as a second option against random permutation the properties of the explanation models, i.e., its hyperparameters. Further the weights can be inferred by a combination of both options. To do so, the variance of the estimator $e_p(x_i, f)[q] =: e_{i,p,q}$ is estimated using the following steps:

a) Take a certain datapoint $x_i$ and calculate the respective feature explanation value for a given feature $q$ for all explanation models $p = 1, \dots, r$ : $(e_{i,1,q}, \dots, e_{i,r,q})$.
b) Now randomly sample datapoints $\bar{x}_i$ that are close to $x_i$ or within a small $L$-norm distance to $\bar{x}_i$. This can be easily achieved by standard software packages. At this step, the hyperparameters of the considered explanation method can be varied if applicable.

c) Calculate for each sampled datapoint $\tilde{x}_i$ the respective explanations ($\tilde{e}_{i,1,q}$, ..., $\tilde{e}_{i,r,q}$).

d) Doing the steps above $B$ times provides a $(B \times r)$ matrix $\Omega$ with elements $\Omega_{bp} = \tilde{e}_{i,p,q}^{b}$ being the $b$th simulated value for the explanation for data instance $i$ and explanation model $p$ and feature $q$.

The procedure above defines a bootstrap-like approach that ideally represents the stability of the explanation, i.e., the feature importance value, with respect to small variation in the input data space, as well as different hyperparameter settings. Taking column wise empirical variance estimators with weights $\mu_b$ corresponding to the distance from the original datapoint, e.g., gaussian kernel, provides an estimator for the variance of the explanation models

$$V\left[e_{i,p,q}\right] = \frac{1}{B-1}\sum_{b=1,...,B}\mu_b\left(\tilde{e}_{i,p,q}^{b} - e_{i,p,q}\right)^2 .$$

Given the assumption that the explanations should be robust to small perturbations and/or hyperparameter changes it is desirable to aggregate those explanations via inverse-variable weighting:

$$m_q(x_i, f) = \frac{\sum_{p=1,...,r}\dfrac{e_{i,p,q}}{V\left[e_{i,p,q}\right]}}{\sum_{p=1,...,r}\dfrac{1}{V\left[e_{i,p,q}\right]}}$$

The value $m_q$ indicates a weighted average of the single feature importance values of the different explanation models at one specific collected datapoint $x_i$.

Note that this estimate is not only reasonable, from the reasoning above but it also can be shown by standard statistical arguments that this estimator minimizes the variance of the whole weighted average $m_q(x_i, f)$ and therefore, provides the most stable estimate for the meta-explanation value. On top of that, the minimized variance of $m_1(x_i, f)$ can even be estimated by calculating:

$$V[m_1(x_i, f)] = V\left[\frac{\sum_{p=1,...,r}\dfrac{e_{i,p,q}}{V\left[e_{i,p,q}\right]}}{\sum_{p=1,...,r}\dfrac{1}{V\left[e_{i,p,q}\right]}}\right] = \frac{1}{\left(\sum_{p=1,...,r}\dfrac{1}{V\left[e_{i,p,q}\right]}\right)^2}V\left[\sum_{p=1,...,r}\dfrac{e_{i,p,q}}{V\left[e_{i,p,q}\right]}\right],$$

which can be calculated directly, since

$$\frac{1}{\left(\sum_{p=1,...,r}\dfrac{1}{V\left[e_{i,p,q}\right]}\right)^2}$$

can be calculated directly as an outcome of the procedure described above. The part

$$V\left[\sum_{p=1,...,r}\dfrac{e_{i,p,q}}{V\left[e_{i,p,q}\right]}\right]$$

requires knowledge of $V[e_{i,p,q}]$ as well as the covariances $V[e_{i,p,q}, e_{i,p',q}]$, but can be calculated directly from empirical covariances obtained from $\Omega$. This further allows to identify redundant explanation models by checking for highly correlated ones.

Since the procedure above enables to create meta-explanation values on a local explanation level, it is trivial to aggregate them to a global explanation by standard aggregation approaches such as averaging the (absolute) values over

all datapoints $x_i$. Furthermore, the same logic allows to combine global XAI methods, i.e., global explanation models or even aggregated local ones with global explanation models.

The approach shows how to aggregate multiple explanation methods in a unified fashion, having only with the constraint that the explanations must refer to the same explanation model and feature. The disclosed method is flexible in the sense that it allows in principle to do so for explanations coming from different explanation model classes but also to compare local and global explanation models. Furthermore, as argued above these meta-explanation values are more faithful in the sense that they express the minimum variance explanations, i.e., feature importance values that can be obtained from aggregation and within this framework they provide uncertainty measures out of the box. By incorporating the variances resulting from perturbations in the input space and the hyperparameter space the solution should be able to incorporate the epistemic and aleatory uncertainty related to computing a single explanation method.

It is to be understood that the above description of examples is intended to be illustrative and that the illustrated components are susceptible to various modifications. For example, the illustrated concepts could be applied for different technical systems and especially for different sub-types of the respective technical system with only minor adaptions.

**Claims**

1. Computer-implemented method for providing a robust root-cause of an analysis result (Yi), output by an AI based analysis model (f) monitoring a machine (10) or on a product of the machine (10), comprising

   - receiving (S1) at least one collected datapoint (xi) comprising multivariate sensor data collected at the machine (10) or the product of the machine (10), each collected datapoint (xi) is structured as a multi-dimensional vector and each element of the vector representing a feature of the machine (10),
   - determining an analysis result (S2) with respect to an analysis task by processing the collected datapoint (xi) by the analysis model (f),
   - determining at least one meta-explanation value (S3) indicating at least one root-cause of the determined analysis result (Yi) by a weighted aggregation of feature importance values output by at least two different explanation models (e1,...,en), wherein a weight value depends on a stability of the feature importance values at the collected datapoint (xi) for each of the explanation models (e1,...,en), and
   - outputting (S4) the analysis result (Yi) and the meta-explanation value (mq) representing the root-cause by a user interface.

2. Computer-implemented method according to claim 1, wherein

   - determining (S31), by each of the at least two different explanation models (e1,...,en), the feature importance value for each feature of the collected datapoint (xi) to the analysis result (Yi) by inputting the analysis model (f) and the collected data point (xi) into the explanation model (ek).

3. Computer-implemented method according to any of the preceding claims, wherein the weight value of the explanation model (e1,...,en) is determined (S32) by combining the feature importance values which are output by the explanation model (e1,...,en) when datapoints are input which are close to the collected datapoint (xi).

4. Computer-implemented method according to any of the preceding claims, wherein the weight value of the explanation model (e1,...,en) is determined (S33) by combining the feature importance values which are output by modified versions of the explanation model (e1,...,en) which differ by at least one hyperparameter of the explanation model (e1,...,en).

5. Computer-implemented method according to any of the preceding claims, wherein redundant explanation models are identified by determining highly correlated explanation models, wherein redundant explanation models are no longer applied for determining feature importance values.

6. Computer-implemented method according to any of the preceding claims, wherein a global meta-explanation value for all datapoints (xi) is generated by an aggregation approach over all datapoints (xi), preferably by averaging the weight values over all datapoints (xi).

7. Computer-implemented method according to any of the preceding claims, wherein the explanation model (e1,...,en) is a local explanation model or a global explanation model.

8. Computer-implemented method according to any of the preceding claims, wherein the local explanation model and/or the global explanation model are model-agnostic.

9. Computer-implemented method according to any of the preceding claims, wherein the analysis model (f) is a machine learning model configured to perform a classification task or a regression task.

10. Computer-implemented method according to any of the preceding claims, wherein a message M, preferably an alarm message or an instruction message, is derived from the analysis result (Yi) and the meta-explanation value (mq) and transferred to the machine 10.

11. Method according to any of the preceding claims, wherein the analysis task is one of an anomaly detection, a predictive maintenance prediction, a quality monitoring.

12. Apparatus (20) for analyzing a machine (10) or a product of the machine, comprising:

   - a data interface (21) configured to receive at least one collected datapoint (xi) comprising multivariate sensor data collected at the machine (10) or the product of the machine (10), each collected datapoint (xi) is structured as a multi-dimensional vector and each element of the vector representing a feature of the machine (10),
   - an analyzer unit (22) configured to determine an analysis result (Yi) with respect to an analysis task by processing the collected datapoint (xi) by an analysis model (f),
   - an explainer unit (23) configured to determine a meta-explanation value (mq) indicating at least one root-cause of the determined analysis result (Yi) by a weighted aggregation of feature importance values output by at least two different explanation models (e1,...,en), wherein the weight value depends on a stability of the feature importance values at the collected datapoint (xi) for each of the explanation models (e1,...,en), and
   - a user interface (24) configured to output the analysis result (Yi) and the meta-explanation value (mq) representing the root-cause.

13. Apparatus according to claim 12, comprising a machine interface (25) configured to derive a message (M), preferably an alarm message and/or an instruction message, from the analysis result (Yi) and the meta-explanation value (mq) and to transfer the message (M) to the machine (10).

14. Apparatus according to any of the preceding claims, wherein the apparatus (20) is one of an anomaly detector, a predictive maintenance evaluator, a quality monitor.

15. A computer program product directly loadable into the internal memory of a digital computer, comprising software code portions for performing the steps of claims 1 to 11 when said product is run on said digital computer.

FIG 1

| IN xi | — S1 |

| Yi=f(xi) | — S2 |

| e1, ..., en | — S31 |
| | — S32 | — S3
| | — S33 |

| OUT Yi, mq (xi, f) | — S4 |

FIG 2

20

21    22    24

xi    23

10

M(Yi, mq)    25

Europäisches
Patentamt

European
Patent Office

Office européen
des brevets

# EUROPEAN SEARCH REPORT

**Application Number**

EP 23 19 3277

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 131 089 A1 (SIEMENS AG [DE]) 8 February 2023 (2023-02-08) * abstract * * paragraph [0049] * * paragraph [0050] - paragraph [0056] * * paragraph [0060] * | 1-15 | INV. G06F16/2455 G06F16/903 G06F16/9035 G06N3/00 |
| X | STEENWINCKEL BRAM ET AL: "FLAGS: A methodology for adaptive anomaly detection and root cause analysis on sensor data streams by fusing expert knowledge with machine learning", FUTURE GENERATION COMPUTER SYSTEMS, ELSEVIER SCIENCE PUBLISHERS. AMSTERDAM, NL, vol. 116, 19 October 2020 (2020-10-19), pages 30-48, XP086401633, ISSN: 0167-739X, DOI: 10.1016/J.FUTURE.2020.10.015 [retrieved on 2020-10-19] * abstract * * Section 1 * * Section 3.2 * * Section 4 * * Section 5.3.1 * * Section 5.4 * | 1-15 | |

-----

-/--

**TECHNICAL FIELDS SEARCHED (IPC)**

G06F
G06N

The present search report has been drawn up for all claims

| Place of search | Date of completion of the search | Examiner |
|---|---|---|
| Berlin | 7 February 2024 | Pose Rodríguez, J |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
 
& : member of the same patent family, corresponding
  document

EPO FORM 1503 03.82 (P04C01)

Europäisches Patentamt

European Patent Office

Office européen des brevets

# EUROPEAN SEARCH REPORT

**Application Number**

EP 23 19 3277

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LUCAS COSTA BRITO ET AL: "An Explainable Artificial Intelligence Approach for Unsupervised Fault Detection and Diagnosis in Rotating Machinery", ARXIV.ORG, CORNELL UNIVERSITY LIBRARY, 201 OLIN LIBRARY CORNELL UNIVERSITY ITHACA, NY 14853, 23 February 2021 (2021-02-23), XP081891018, * abstract * * Section 3.1 * * Section 3.2 * * Section 3.3 * | 1-15 | |
| A | Rieger Laura ET AL: "Aggregating explanation methods for stable and robust explainability", arXiv (Cornell University), 20 March 2020 (2020-03-20), pages 1-25, XP93128559, Ithaca DOI: 10.48550/arxiv.1903.00519 Retrieved from the Internet: URL:https://arxiv.org/pdf/1903.00519.pdf [retrieved on 2024-02-07] * the whole document * | 1,12,15 | |
| | | | **TECHNICAL FIELDS SEARCHED (IPC)** |

The present search report has been drawn up for all claims

| Place of search | Date of completion of the search | Examiner |
|---|---|---|
| Berlin | 7 February 2024 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

**EP 23 19 3277**

This annex lists the patent family members relating to the patent documents cited in the above-mentioned European search report.
The members are as contained in the European Patent Office EDP file on
The European Patent Office is in no way liable for these particulars which are merely given for the purpose of information.

**07-02-2024**

| Patent document cited in search report | | Publication date | Patent family member(s) | | Publication date |
|---|---|---|---|---|---|
| EP 4131089 | A1 | 08-02-2023 | EP | 4131089 A1 | 08-02-2023 |
| | | | WO | 2023012029 A1 | 09-02-2023 |

EPO FORM P0459

For more details about this annex : see Official Journal of the European Patent Office, No. 12/82

## REFERENCES CITED IN THE DESCRIPTION

**Non-patent literature cited in the description**

- **RIEGER** ; **HANSEN**. *Aggregating explanation methods for stable and robust explainability*, 2020, https://arxiv.org/abs/1903.00519